# EUROPÄISCHE PATENTSCHRIFT

(11) **EP 1 444 847 B1**
(45) Veröffentlichungstag und Bekanntmachung des Hinweises auf die Patenterteilung: **24.02.2010**
(21) Anmeldenummer: 02787360.3
(22) Anmeldetag: 14.11.2002
(51) Int. Cl.: H04W 8/24

(54) **VERFAHREN ZUM ERNEUERN VON PROGRAMMDATEIEN EINES PROGRAMMIERBAREN MOBILEN TELEKOMMUNIKATIONSENDGERÄTS**
METHOD FOR RENEWING PROGRAM FILES OF A PROGRAMMABLE MOBILE TELECOMMUNICATIONS TERMINAL
PROCEDE POUR RENOUVELER DES FICHIERS PROGRAMMES D'UN TERMINAL MOBILE ET PROGRAMMABLE DE TELECOMMUNICATION

(30) Priorität: 15.11.2001 DE 10155998
(43) Veröffentlichungstag der Anmeldung: 11.08.2004
(73) Patentinhaber: T-Mobile Deutschland GmbH, 53227 Bonn (DE)
(72) Erfinder: SCHMITT, Harald, 56170 Bendorf (DE)
(74) Vertreter: Riebling, Peter
(86) Internationale Anmeldenummer: PCT/DE2002/004218
(87) Internationale Veröffentlichungsnummer: WO 2003/047287

(56) Entgegenhaltungen:
- EP-A- 0 685 972
- WO-A-97/16938
- DE-A- 19 543 843
- GB-A- 2 357 011

## Beschreibung

Die vorliegende Erfindung beschreibt ein Verfahren zum Erneuern von Programmdateien, z.B. in Form von Software Upgrades, eines programmierbaren mobilen Telekommunikationsendgerätes, insbesondere eines Mobilfunkendgeräts.

Moderne technische Geräte, wie auch mobile Telekommunikationsendgeräte, beinhalten eine elektronische und mechanische Hardware und entsprechende Software in Form von Programmdateien zum Steuern der Funktionen der Hardware. Mobilfunkendgeräte umfassen im wesentlichen eine Datenverarbeitungseinrichtung mit Prozessor- und Speichermitteln, eine Sende- und Empfangseinrichtung, eine Anzeigeeinrichtung sowie eine Eingabeeinrichtung. Diese Einrichtungen werden über eine in den Speichermitteln gespeicherte Software gesteuert.

Mit zunehmender Weiterentwicklung der Technik werden immer wieder Software Upgrades von Telekommunikationsendgeräten, insbesondere auch von Mobilfunkendgeräten notwendig. Derartige Notwendigkeiten können sich ergeben durch Mängel des Gerätes, welche erst während des Betriebes auftreten. Weiterhin können sich Software Upgrades von Mobilfunkendgeräten. ergeben, indem der Netzbetreiber neue Funktionalitäten oder Dienste innerhalb eines Mobilfunknetzes einführt. Ein Netzbetreiber ist bedacht, durch das Einführen von neuen Diensten die Funktionsfähigkeit von bereits ausgelieferten Mobilfunkendgeräten nicht zu beeinträchtigen. Wird jedoch die Funktion des Endgerätes durch neue Dienste des Netzes negativ beeinflusst oder ist eine Nutzung des neuen Dienstes nicht möglich, so ist ein Software Upgrade des Endgerätes notwendig. In diesem Fall ist der Netzbetreiber für das Software Upgrade der Endgeräte verantwortlich.

Stand der Technik sind sogenannte programmierbare Mobilfunkgeräte. In der Regel werden derartige Endgeräte über eine Schnittstelle mit neuer Software versorgt. Diese Art von Software Upgrade kann im Normalfall nicht vom Teilnehmer bzw. Endgerätebesitzer selbst durchgeführt werden. Hierzu sind die Endgeräte an entsprechende Einrichtungen des Netzbetreibers bzw. des Endgeräteproduzent zu senden. Dies bedeutet ein kostenintensiver Rückruf der entsprechenden Endgeräte für den Fall, dass neue Netzdienste einen Software Upgrade erforderlich machen.

Neuere Möglichkeiten den Softwarestand eines Endgeräts zu erneuern sind über das Internet gegeben. Hierbei lädt der Endgerätebesitzer die neue Endgerätesoftware über das Internet z.B. in seinen Personal Computer. Anschließend wird die Endgerätesoftware über eine Schnittstelle zwischen PC und Endgerät, in der Regel eine RS232 oder Infrarot Schnittstelle, in das Endgerät geladen. Diese Möglichkeit haben jedoch nur Personen mit entsprechenden technischen Möglichkeiten und Internetzugang. Ein weiterer großer Nachteil beider Methoden ist dass der Teilnehmer oder Endgerätebesitzer entsprechend selbst aktiv werden muss.

Die Veröffentlichungen WO 97/16938 A1, GB 2 357 011 A und DE 195 43 843 A1 offenbaren Verfahren zum Erneuern von Programmdateien eines programmierbaren, mobilen Telekommunikationsendgeräts. Die Programmdateien werden von einem Telekommunikationsnetz über die Luftschnittstelle zum Telekommunikationsendgerät übertragen. Es werden für das jeweilige Endgerät geeignete und vorhandene Programmdateien ermittelt und über die Luftschnittstelle an das Endgerät übertragen.

Aufgabe der Erfindung ist es, ein Verfahren zum Erneuern von Programmdateien eines programmierbaren mobilen Telekommunikationsendgerätes anzugeben, das einfach, kostengünstig und mit wenig Aufwand verbunden ist.

Die Aufgabe wird erfindungsgemäß durch die im Anspruch 1 angegebenen Merkmale gelöst.

Der Vorteil dieser Erfindung ist, dass ein Erneuern von Programmdateien von Mobilfunkgeräten innerhalb eines Mobilfunknetzes automatisiert und ortsunabhängig durchgeführt werden kann. Dadurch ist ein Software Upgrade eines Endgerätes möglich, ohne dass der Endgerätebesitzer aktiv werden muss bzw. Kenntnis davon nimmt. Weiterhin werden die Mühen und Kosten für ein Software Upgrade, wie sie z.B. bei einer Rückrufaktion entstehen würden, sowohl für den Endgerätebesitzer als auch für den Netzbetreiber oder Hersteller drastisch reduziert.

Der Grundgedanke dieser Erfindung ist die Verteilung der zu erneuernden Programmdateien eines mobilen Endgerätes mittels der vorhandenen Datendienste innerhalb eines Mobilfunknetzes. Das Endgerät empfängt die neuen Programmdateien und tauscht diese gegen die alten Programmdateien selbstständig aus. Dieses Verfahren kommt ohne zusätzliches Equipment aus.

Da die Mobilfunknetze zukünftig Dienste mit immer höheren Datenraten anbieten werden, z.B. GPRS (General Packet Radio Service) oder UMTS (Universal Mobile Telecommunication Service), ist es möglich, auch umfangreichere Programmdateien über Funknetze zu übertragen. Über diese schnellen Datendienste eines Mobilfunknetzes werden die Programmteile der Endgerätesoftware an die jeweiligen Endgeräte übertragen, welche zu erneuern sind.

Weiterhin ist für die Umsetzung dieser Erfindung ein Endgerät notwendig welches im laufenden Betrieb neue Softwareteile empfangen und speichern kann. Nach dem vollständigen Empfang aller neuen Softwareteile führt das Endgerät automatisch einen Wechsel der Software durch.

Die Erfindung ermöglicht in vorteilhafter Weise das automatische Erkennen eines notwendigen Softwaretausches von Endgeräten. Jedes Endgerät besitzt eine eindeutige Gerätenummer, die sogenannte IMEI (International Manufacturer Equipment Identity). Anhand dieser IMEI-Nummer kann auf den Typ des Endgerätes geschlossen werden. Bei jedem Verbindungsaufbau zwischen dem Mobilfunknetz und dem Endgerät wird in der Regel die IMEI an das Mobilfunknetz weitergegeben. Wird bei dem Einführen eines neuen Dienstes oder einer neuen Funktion eine neue Software für bestimmte Endgerätetypen notwendig, so kann der Netzbetreiber die Endgeräte anhand dieser IMEI identifizieren. Im Anschluss an die Identifizierung kann der Netzbetreiber das Erneuern der Endgerätesoftware entsprechend der Erfindung einleiten. Dieser Vorgang kann automatisiert werden. -

Ein Ausführungsbeispiel der Erfindung wird anhand der Zeichnungsfigur erläutert.

Das in Beispiel gezeigte Mobilfunkendgerät 1 umfasst in bekannter Weise ein Funkteil 2, im wesentlichen bestehend aus einem Sender 3, einem Empfänger 4 und einer Antenne 5, ein Datenverarbeitungsteil 6, im wesentlichen bestehend aus einem Prozessor 7 und einem Speicher 8, und ein Bedienteil 9, im wesentlichen bestehend aus einer Anzeige 10 und einer Tastatur 11.
Das Datenverarbeitungsteil 6 sowie das Funkteil 2 und das Bedienteil 9 werden über eine Software gesteuert, die mehrere Programmdateien umfasst und im Speicher 8 abgelegt ist.

Das Mobilfunkendgerät kommuniziert mit Basisstationen 13 des Mobilfunknetzes 1. Erfindungsgemäß können in einer an das Mobilfunknetz 12 angebundenen Serviceeinrichtung 14 neue Programmdateien für das Mobilfunkendgerät 1 vorgehalten werden.
Bei jedem Verbindungsaufbau zwischen dem Mobilfunknetz 12,13 und dem Endgerät 1 wird die IMEI an das Mobilfunknetz 12 weitergegeben. Das Endgerät 1 wird anhand seiner IMEI in der Serviceeinrichtung 14 identifiziert. Ist eine neue Software für das Endgerät 1 vorhanden, so wird das Erneuern der Endgerätesoftware entsprechend der Erfindung eingeleitet. Die neuen Programmdateien werden von der Serviceeinrichtung 14 über das Mobilfunknetz 12,13 an das Endgerät 1 übertragen und im Speicher 8 abgespeichert. Anschließend werden die neuen Programmdateien installiert.

### Bezugszeichenliste

- 1: Mobilfunkendgerät
- 2: Funkteil
- 3: Sender
- 4: Empfänger
- 5: Antenne
- 6: Datenverarbeitungsteil
- 7: Prozessor
- 8: Speicher
- 9: Bedienteil
- 10: Anzeige
- 11: Tastatur
- 12: Mobilfunknetz
- 13: Basisstation
- 14: Serviceeinrichtung

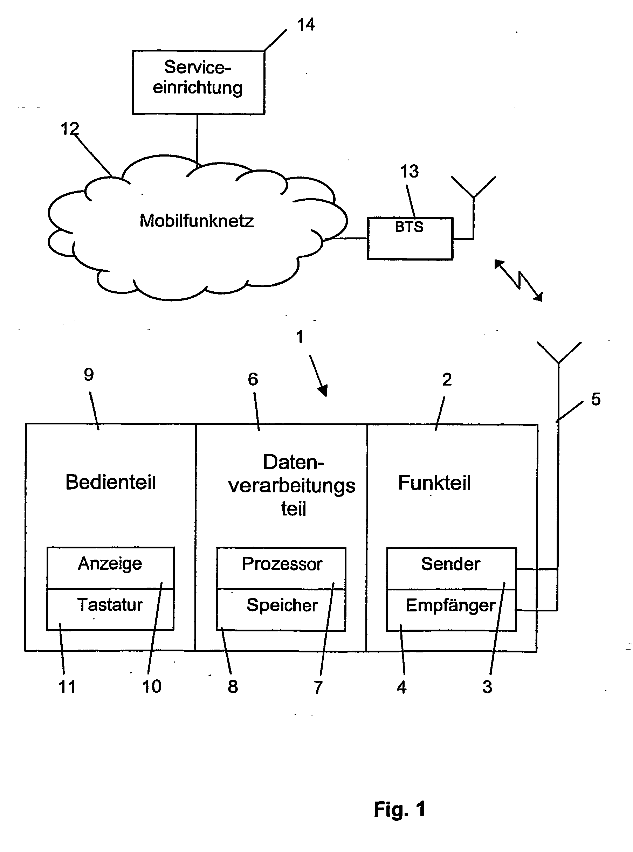

## Patentansprüche

1. Verfahren zum Erneuern von Programmdateien eines programmierbaren, mobilen Telekommunikationsendgeräts (1), bei dem die Programmdateien von einem Telekommunikationsnetz (12) über die Luftschnittstelle zum Telekommunikationsendgerät übertragen werden, **gekennzeichnet durch** die Schritte:
Übermitteln der IMEI des Endgeräts (1) von Endgerät (1) an das Telekommunikationsnetz (12),
- Ermitteln des Endgerätetyps **durch** das Telekommunikationsnetz anhand der vom Endgerät (1) übermittelten IMEI,
- Einleiten einer Prozedur zum Erneuern der Programmdateien im Endgerät (1) aufgrund der übermittelten IMEI und des ermittelten Endgerätetyps,
- Ermitteln und Bereitstellen von in Einrichtungen (14) des Telekommunikationsnetzes vorhandenen oder anderweitig verfügbaren neuen Programmdateien für den ermittelten Endgerätetyp, und
- automatisches Übertragen der vorhandenen neuen Programmdateien über die Luftschnittstelle an das Endgerät (1).

2. Verfahren nach Anspruch 1, **dadurch gekennzeichnet, dass** die Programmdateien im Endgerät (1) automatisch installiert werden bzw. vorhandene Programmdateien automatisch gegen neue Programmdateien ausgetauscht werden.

3. Verfahren nach einem der vorhergehenden Ansprüche, **dadurch gekennzeichnet, dass** das Endgerät (1) im laufenden Betrieb Programmdateien oder Teile von Programmdateien vom Telekommunikationsnetz (1) empfängt und speichert, und nach dem vollständigen Empfang der Programmdateien diese automatisch installiert.

4. Verfahren nach einem der vorhergehenden Ansprüche, **dadurch gekennzeichnet, dass** die Übertragung und Installation der Programmdateien erst nach Freigabe durch den Benutzer des Endgeräts (1) erfolgt.

## Claims

1. Process for renewing program files of a programmable, mobile telecommunications terminal (1), in which the program files are transmitted from a telecommunications network (12) via the air interface to the telecommunications terminal, **characterised by** the steps:
transferring the IMEI of the terminal (1) from terminal (1) to the telecommunications network (12),
- determining the terminal type through the telecommunications network using the IMEI transferred from the terminal (1),
- introducing a procedure for renewing the program files in the terminal (1) on the basis of the transferred IMEI and of the terminal type determined,
- determining and providing new program files present in devices (14) of the telecommunications network or which are available by different means for the terminal type determined, and
- automatic transmission of the existing new program files via the air interface to the terminal (1).

2. Process according to claim 1, **characterised in that** the program files are installed automatically in the terminal (1) or existing program files are automatically exchanged for new program files.

3. Process according to one of the preceding claims, **characterised in that** the terminal (1) in working operation receives and stores program files or parts of program files from the telecommunications network (1), and after the program files have been received completely, automatically installs them.

4. Process according to one of the preceding claims, **characterised in that** the transmission and installation of the program files is only effected after enabling by the user of the terminal (1).

## Revendications

1. Procédé pour renouveler des fichiers programmes d'un terminal mobile programmable de télécommunication (1), selon lequel les fichiers programmes sont transmis par un réseau de télécommunication (12), par l'intermédiaire de l'interface air, au terminal de télécommunication, **caractérisé par** les étapes suivantes :
transmission de l'identité internationale IMEI du terminal (1) de celui-ci vers le réseau de télécommunication (12),
- recherche, par le réseau de télécommunication, du type de terminal à l'aide de l'IMEI transmise par le terminal (1),
- lancement d'une procédure pour renouveler les fichiers programmes dans le terminal (1) sur la base de l'IMEI transmise et du type de terminal déterminé,
- recherche et préparation de nouveaux fichiers programmes pour le type de terminal déterminé, qui sont présents ou disponibles d'une autre manière dans des dispositifs (14) du réseau de télécommunication, et
- transmission automatique au terminal (1), par l'intermédiaire de l'interface air, des nouveaux fichiers programmes présents.

2. Procédé selon la revendication 1, **caractérisé en ce que** les fichiers programmes sont installés automatiquement dans le terminal (1) ou des fichiers programmes présents sont échangés automatiquement contre des nouveaux fichiers programmes.

3. Procédé selon l'une des revendications précédentes, **caractérisé en ce que** le terminal (1) reçoit à partir du réseau de télécommunication (1) et met en mémoire de manière continue des fichiers programmes ou des parties de fichiers programmes, et, après réception complète des fichiers programmes, installe automatiquement ceux-ci.

4. Procédé selon l'une des revendications précédentes, **caractérisé en ce que** la transmission et l'installation des fichiers programmes ne se font qu'après validation par l'utilisateur du terminal (1).
